# EUROPÄISCHE PATENTANMELDUNG

(11) **EP 4 585 829 A1**
(43) Veröffentlichungstag der Anmeldung: **16.07.2025**
(21) Anmeldenummer: 24151239.1
(22) Anmeldetag: 10.01.2024
(51) Int. Cl.: F16H 55/06, F16H 55/17

(54) **NABENKÖRPER FÜR EIN VERBUNDRAD, VERBUNDRAD, SOWIE LENKEINHEIT FÜR EIN KRAFTFAHRZEUG**

(71) Anmelder: IMS Gear SE & Co. KGaA, 78166 Donaueschingen (DE)
(72) Erfinder: Keller, Alexander, 79848 Bonndorf (DE); Birk, Sebastian, 78647 Trossingen (DE); Stoppel, Eugen, 78357 Mühlingen (DE)
(74) Vertreter: Westphal, Mussgnug & Partner Patentanwälte mbB

(57) **Zusammenfassung**

Nabenkörper (16) für ein Verbundrad (10), insbesondere ein Verbundzahnrad (12), aufweisend
• eine Rotationsachse (14),
• eine erste Nabenstirnseite (20),
• eine zweite Nabenstirnseite (22),
• eine entlang der Rotationsachse (14) zwischen der ersten Nabenstirnseite (20) und der zweiten Nabenstirnseite (22) angeordnete Außenmantelfläche (24) ,

wobei die Außenmantelfläche (24) eine Mitnahmeverzahnung (28) mit mindestens einem Mitnahmezahn (30) sowie einen konvexen Außenmantelabschnitt (64) aufweist,
sowie Verbundrad (10), insbesondere Verbundzahnrad (12), mit einem derartigen Nabenkörper (16),
sowie Lenkeinheit für ein Kraftfahrzeug mit einem derartigen Verbundrad.

## Beschreibung

Die Erfindung betrifft ein einen Nabenkörper für ein Verbundrad, insbesondere ein Verbundzahnrad, ein Verbundrad, insbesondere ein Verbundzahnrad, sowie eine Lenkeinheit für ein Kraftfahrzeug.

Verbundräder, die vor allem als Verbundzahnräder beispielsweise in Lenkeinheiten von Kraftfahrzeugen zur Anwendung kommen, weisen typischerweise einen Nabenkörper und einen radial außerhalb des Nabenkörpers angeordneten Kranzkörper auf. Bei Verbundzahnrädern umfasst der Kranzkörper eine Außenverzahnung, die mit einem weiteren Zahnrad in Eingriff gebracht werden kann. In dieser speziellen Ausführungsform des Verbundrads wird der Kranzkörper deshalb häufig als Zahnkranz bezeichnet.

Der Nabenkörper und der Kranzkörper sind in aller Regel aus unterschiedlichen Werkstoffen gefertigt. So wird häufig der Nabenkörper aus Metall und der Kranzkörper aus Kunststoff hergestellt. Ein beispielsweise aus der EP 1 780 445 A1 bekannten Fertigungsverfahren sieht dabei vor, den metallischen Nabenkörper im Kunststoffspritzgussverfahren mit dem Kranzkörper zu umspritzen.

Um eine dauerhafte Verbindung zwischen dem Nabenkörper und dem Kranzkörper zu erhalten, sind der Nabenkörper und der Kranzkörper häufig insbesondere formschlüssig miteinander verbunden. Dabei ist es bekannt, eine Mitnahmeverzahnung auf den Nabenkörper aufzubringen um Drehmoment zwischen dem Nabenkörper und dem Kranzkörper übertragen zu können. Zur Übertragung von Axialkräften sind bislang beispielweise Schultern und/oder Nuten am Nabenkörper angeordnet, in die der Kranzkörper eingreift.

Die Schultern und/oder Nuten sind besonders in axialer Richtung regelmäßig durch verhältnismäßig scharfen Kanten begrenzt. Durch Aufbringen der Mitnahmeverzahnung können zusätzliche scharfe Kanten an dem Nabenkörper entstehen. So wird die Mitnahmeverzahnung häufig mittels Wälzfräsen gefertigt, wobei vor allem im Bereich des Fräserauslaufs beziehungsweise in dem Bereich, in dem die Mitnahmeverzahnung durch die Schulter oder Nut dringt, scharfe Kanten entstehen können.

Die scharfen Kanten führen beim Abkühlen des kunststoffgespritzten Kranzkörpers aufgrund von Kerbwirkungen regelmäßig zu Schwundspannungsrissen und damit zum vorzeitigen Ausfall des Bauteils. Auch im Betrieb können durch auftretende Radial- und Axialkräfte an scharfen Kanten lokale Spannungsüberhöhungen entstehen, die die Rissentstehung und -ausbreitung begünstigen.

Vor allem auf den Nabenkörper aufgebrachte Nuten können durch die Verringerung des spezifischen Volumens des Kunststoffs beim Abkühlen zudem freischwinden. In der Folge treten bei entsprechenden Verbundrädern immer wieder unerwünschte Geräusche und/oder Spiel zwischen dem Nabenkörper und dem Kranzkörper beim Lastwechsel vor allem in axialer Richtung auf. Dies verkürzt nicht nur die Lebensdauer des Bauteils. Es beeinträchtigt auch die Qualität und den Komfort der Lenkeinheit, in der ein derartiges Verbundrad eingesetzt wird.

Der Erfindung liegt die Aufgabe zugrunde, einen Nabenkörper für ein Verbundrad bereitzustellen, das die Herstellung eines langlebigen und zuverlässigen sowie den Komfortanforderungen genügenden Verbundrads ermöglicht, und das dabei einfach herstellbar ist. Der Erfindung liegt ferner die Aufgabe zugrunde, ein langlebiges, zuverlässiges und einfach herstellbares Verbundrad bereitzustellen, das den Komfortanforderungen genügt. Darüber hinaus liegt der Erfindung die Aufgabe zugrunde eine qualitativ hochwertige und komfortable, gleichzeitig aber kostengünstige Lenkeinheit bereitzustellen.

Die Aufgaben werden erfindungsgemäß gelöst durch einen Nabenkörper mit den Merkmalen des Patentanspruchs 1, ein Verbundrad mit den Merkmalen des Patentanspruchs 11 sowie eine Lenkeinheit mit den Merkmalen des Anspruchs 15. Vorteilhafte Ausgestaltungen und Weiterbildungen der Erfindung sind in den abhängigen Ansprüchen angegeben.

Ein erfindungsgemäßer Nabenkörper für ein Verbundrad, insbesondere ein Verbundzahnrad, eine Rotationsachse, eine erste Nabenstirnseite, eine zweite Nabenstirnseite sowie eine Außenmantelfläche, wobei die Außenmantelfläche entlang der Rotationsachse zwischen der ersten Nabenstirnseite und der zweiten Nabenstirnseite angeordnet ist. Die Außenmantelfläche weist eine Mitnahmeverzahnung mit mindestens einem Mitnahmezahn auf. Vorzugsweise weist die Mitnahmeverzahnung eine Vielzahl an dem mindestens einen Mitnahmezahn entsprechenden Mitnahmezähnen auf, die gleichmäßig in Umfangsrichtung der Außenmantelfläche um die Rotationsachse angeordnet sind. Die Außenmantelfläche kann einen konvexen Außenmantelabschnitt aufweisen. Die Außenmantelfläche ist damit, zumindest abschnittsweise, vorzugsweise ballig ausgebildet. So kann ein auf die Nabe aufgespritzter Kranzkörper des Verbundrads auf den Nabenkörper aufschwinden, wodurch die Festigkeit und Steifigkeit der Verbindung zwischen dem Nabenkörper und dem Kranzkörper erhöht werden kann. Außerdem können mittels des konvexen Außenmantelabschnitts besonders vorteilhaft Axialkräfte übertragen werden. Vorzugsweise ist der konvexe Außenmantelabschnitt um die Rotationsachse umlaufend angeordnet. Damit ist der konvexe Außenmantelabschnitt vorzugsweise in einer Schnittansicht des Nabenkörpers entlang der Rotationsachse sichtbar.

In einer bevorzugten Ausführungsform der Erfindung weist der Fußkreisdurchmesser der Mitnahmeverzahnung längs des mindestens einen Mitnahmezahns einen Fußkreisdurchmesserverlauf auf. Die Mitnahmeverzahnung kann als Geradverzahnung ausgebildet sein. In diesem Fall ist der mindestens eine Mitnahmezahn entlang der Rotationsachse ausgerichtet. Der Fußkreisdurchmesserverlauf kann ein Maximum aufweisen.

Vorzugsweise ist das Maximum des Fußkreisdurchmesserverlaufs in dem konvexen Außenmantelabschnitt angeordnet. Innerhalb des konvexen Außenmantelabschnitts kann der Fußkreisdurchmesserverlauf einen konvexen Fußkreisabschnitt mit einem Konvexitätsradius aufweisen. Der Konvexitätsradius kann konstant oder variabel ausgebildet sein. Vorzugsweise ist das Maximum des Fußkreisdurchmesserverlaufs in dem konvexen Fußkreisabschnitt angeordnet. Die Mitnahmeverzahnung kann beidseits des konvexen Außenmantelabschnitts jeweils die halbgloboidförmige Kontur aufweisen.

Vorzugsweise weist die erste Nabenstirnseite eine erste Nabenstirnfläche und die zweite Nabenstirnseite eine zweite Nabenstirnfläche auf. Die zweite Nabenstirnseite ist vorzugsweise axial gegenüber der ersten Nabenstirnfläche angeordnet ist. Dabei kann das Maximum beabstandet zu der ersten Nabenstirnfläche und/oder der zweiten Nabenstirnfläche angeordnet sein. Die Anordnung des Maximums beabstandet zumindest zu einer der Nabenstirnflächen kann bewirken, dass eine ungünstige Überlagerung der auf den Kranzkörper wirkenden Spannungen vermieden werden kann. Entsprechend den Nabenstirnflächen kann der Kranzkörper Kranzstirnflächen aufweisen. Während Betriebsspannungen, die typischerweise durch das Aufbringen von äußeren Kräften auf das Verbundrad im Betrieb auftreten, häufig im Bereich der ersten Kranzstirnfläche und der ersten Nabenstirnfläche beobachtet werden können, treten die im Kranzkörper auftretenden Schwundspannungen in dem konvexen Außenmantelabschnitt, insbesondere im Bereich um das Maximum auf. Darüber hinaus kann die Mitnahmeverzahnung mit dem Maximum im Fußkreisdurchmesserverlauf leicht durch urformende Fertigungsverfahren wie beispielsweise Sintern oder umformende Fertigungsverfahren wie z.B. Fließpressen hergestellt werden.

Sofern nicht anders beschrieben, werden die Begriffe "radial" und "axial" hier und im Folgenden bezüglich der Rotationsachse verwendet. Flächen, die wie die erste Nabenstirnfläche, hier und im Folgenden als "Stirnfläche" bezeichnet werden, definieren vorzugsweise den entsprechenden Körper, also den Nabenkörper oder den Kranzkörper, in axialer Richtung. Die als "Stirnfläche" bezeichneten Flächen, insbesondere des Nabenkörpers, können konisch um die Rotationsachse ausgebildet sein oder eine andere Formgebung aufweisen. Vorzugsweise sind die als "Stirnfläche" bezeichneten Flächen orthogonal zur Rotationsachse angeordnet. Flächen der ersten Nabenstirnseite, die orthogonal zur Rotationsachse angeordnet sind, sind damit vorzugsweise der ersten Nabenstirnfläche zuzurechnen. Die Außenmantelfläche ist vorzugsweise ringförmig um die Rotationsachse angeordnet.

Außerdem kann das Maximum mittig oder außermittig zwischen der ersten Nabenstirnfläche und der zweiten Nabenstirnfläche angeordnet sein. So kann die Anordnung des Maximums auf das Fertigungsverfahren insbesondere des Kranzkörpers abgestimmt werden, sodass zum Beispiel eine Lunkerbildung im Kranzkörper vermieden werden kann. Die erste Nabenstirnfläche und/oder die zweite Nabenstirnfläche ist vorzugsweise orthogonal zu der Rotationsachse angeordnet. Flächen der jeweiligen Nabenstirnseite, die orthogonal zur Rotationsachse angeordnet sind, sind vorzugsweise der entsprechenden Nabenstirnfläche zuzurechnen. Beispielsweise kann ein Absatz des Nabenkörpers eine derartige Fläche aufweisen. Vorzugsweise ist die Außenmantelfläche von der ersten Nabenstirnfläche und/oder der zweiten Nabenstirnfläche verschieden. Die Außenmantelfläche kann axial an die ersten Nabenstirnfläche und/oder die zweite Nabenstirnfläche angrenzen.

Der Nabenkörper kann derart ausgebildet sein, dass in der ersten Nabenstirnfläche ein erster Fußkreisstirndurchmesser und/oder in der zweiten Nabenstirnfläche ein zweiter Fußkreisstirndurchmesser angeordnet ist. Der erste Fußkreisstirndurchmesser kann gleich oder ungleich dem zweiten Fußkreisstirndurchmesser sein. Vorzugsweise bilden der erste Fußkreisstirndurchmesser und/oder der zweite Fußkreisstirndurchmesser jeweils einen Endpunkt des Fußkreisdurchmesserverlaufs. Dadurch kann der Fußkreisdurchmesserverlauf an den jeweiligen Anwendungsfall, insbesondere die zu erwartenden Axialkräfte, angepasst werden. Außerdem kann der Nabenkörper somit hinsichtlich des Aufbringens des Kranzkörpers mittels Spitzgießen vorteilhaft gestaltet werden. Insbesondere kann so ungleiches Schwindungsverhalten des Kunststoffs beiderseits des Maximums ausgeglichen werden.

In einer bevorzugten Ausführungsform der Erfindung ist der Fußkreisdurchmesserverlauf von der ersten Nabenstirnfläche bis zur zweiten Nabenstirnfläche durchgehend stetig und/oder differenzierbar ausgebildet. Der Fußkreisdurchmesserverlauf wird somit vorzugsweise nicht von in Umfangsrichtung verlaufenden Nuten unterbrochen. Außerdem können so scharfe Kanten und damit einhergehende Kerbwirkungen entlang des Fußkreisdurchmesserverlaufs vermieden werden. Ausläufe der Mitnahmeverzahnung sind in einer Ausführungsform der Erfindung ausschließlich in der ersten Nabenstirnfläche und/oder der zweiten Nabenstirnfläche angeordnet. Die Außenmantelfläche kann damit frei von den Ausläufen der Mitnahmeverzahnung ausgebildet sein. Der mindestens eine Mitnahmezahn kann sich, insbesondere durchgehend, von der ersten Nabenstirnfläche bis zur zweiten Nabenstirnfläche erstrecken.

In einer Ausführungsform der Erfindung erstreckt sich der konvexe Außenmantelabschnitt von der ersten Nabenstirnfläche bis zur zweiten Nabenstirnfläche. Dadurch kann die Mitnahmeverzahnung besonders homogen ausgebildet sein. Zudem kann eine derartige Mitnahmeverzahnung geringere Anforderungen hinsichtlich der zur Fertigung erforderlichen Werkzeuge stellen.

In einer Weiterbildung der Erfindung weist der Fußkreisdurchmesserverlauf einen ersten konkaven Abschnitt mit einem, vorzugsweise konstanten, ersten Kavitätsradius auf. Eine Mitnahmeverzahnung mit einem derartigen Fußkreisdurchmesserverlauf kann einfach durch Wälzfräsen hergestellt werden. Durch einen derartigen Fußkreisdurchmesserverlauf kann die Mitnahmeverzahnung zumindest abschnittsweise eine halbgloboidförmige Kontur aufweisen. In einer alternativen Ausführungsform kann der erste Kavitätsradius variabel ausgebildet sein.

Vorzugsweise weist der Fußkreisdurchmesserverlauf einen zweiten konkaven Abschnitt mit einem, vorzugsweise konstanten, zweiten Kavitätsradius auf. Der erste Kavitätsradius kann gleich oder ungleich dem zweiten Kavitätsradius sein. Dadurch steht eine weitere Möglichkeit zur Verfügung, um den Fußkreisdurchmesserverlauf an den jeweiligen Anwendungsfall, insbesondere die zu erwartenden Axialkräfte, anzupassen und/oder den Nabenkörper hinsichtlich des Aufbringens des Kranzkörpers mittels Spitzgießen vorteilhaft zu gestalten. Das Maximum des Fußkreisdurchmesserverlaufs kann zwischen dem ersten konkaven Abschnitt und dem zweiten konkaven Abschnitt angeordnet sein. Insbesondere kann so ungleiches Schwindungsverhalten des Kunststoffs beiderseits des Maximums ausgeglichen werden.

In einer Weiterbildung der Erfindung ist die Mitnahmeverzahnung als Schrägverzahnung ausgebildet. Dadurch kann ein Anteil einer zu zwischen dem Kranzkörper und dem Nabenkörper zu übertragenden Axialkraft zusätzlich über eine Mitnahmezahnflanke des mindestens einen Mitnahmezahns übertragen werden. Damit kann die Lebensdauer des Verbundrads weiter gesteigert werden. Sofern das Verbundrad als schrägverzahntes Verbundzahnrad ausgebildet ist, sind die Mitnahmeverzahnung und eine Verbundradverzahnung des Verbundrads in dieselbe Richtung gegen die Rotationsachse geneigt. Besonders bevorzugt ist ein Mitnahmeschrägungswinkel der Mitnahmeverzahnung kleiner oder gleich einem Verbundradschrägungswinkel der Verbundradverzahnung.

Eine Zahnhöhe des mindestens einen Mitnahmezahns kann entlang der Mitnahmezahnflanke des mindestens einen Mitnahmezahns zumindest abschnittsweise konstant sein. Dadurch können bei der Fertigung des Nabenkörpers scharfe Kanten an der Mitnahmeverzahnung vermieden werden.

Ein erfindungsgemäßes Verbundrad, insbesondere Verbundzahnrad, umfasst den zuvor beschriebenen Nabenkörper und den Kranzkörper, der radial außerhalb des Nabenkörpers angeordnet ist.

Die Begriffe "konkav" und "konvex" beziehen sich hier und im Folgenden im Zusammenhang mit dem Fußkreisdurchmesserverlauf vorzugsweise auf den Kranzkörper. Ein konvexer Abschnitt beschreibt damit vorzugsweise eine sich zum Kranzkörper hin erhebende Wölbung. Ein konkaver Abschnitt beschreibt vorzugsweise eine zum Kranzkörper hin geöffnete Ausnehmung.

Der Kranzkörper und die Mitnahmeverzahnung sind ineinander eingreifend angeordnet. Der Kranzkörper kann einen Kranzinnendurchmesser aufweisen, der einem Nabenaußendurchmesser des Nabenkörpers entsprechen kann. Insbesondere durch die Mitnahmeverzahnung können der Kranzinnendurchmesser und der Nabenaußendurchmesser entlang eines Umfangs des Verbundrads variabel ausgebildet sein. So ist vorzugsweise der Nabenaußendurchmesser an einem Zahnkopf des mindestens einen Mitnahmezahns durch einen Kopfkreisdurchmesser der Mitnahmeverzahnung und an einem Zahnfuß des mindestens einen Mitnahmezahns durch einen Fußkreisdurchmesser der Mitnahmeverzahnung definiert. Der Kranzinnendurchmesser und/oder der Nabenaußendurchmesser können entlang der Rotationsachse variabel ausgebildet sein.

Vorzugsweise ist der Nabenkörper aus Metall, besonders bevorzugt Stahl, gefertigt. Der Kranzkörper ist bevorzugt aus Kunststoff, besonders bevorzugt POM, gefertigt. Insbesondere kann der Kranzkörper mittels Kunststoffspritzgussverfahrens gefertigt sein, vorzugsweise derart, dass der Kranzkörper unmittelbar auf den Nabenkörper aufgespritzt ist. Vorzugsweise liegt der Kranzkörper unmittelbar und flächig an dem Nabenkörper an.

Der Kranzkörper weist ein erstes axiales Kranzkörperende und ein zweites axiales Kranzkörperende auf. Dabei können das erste axiale Kranzkörperende und/oder das zweite axiale Kranzkörperende an dem Nabenkörper ausschließlich an der Außenmantelfläche angeordnet sein, vorzugsweise entlang des gesamten Umfangs des Verbundrads. Das erste axiale Kranzkörperende und/oder das zweite axiale Kranzkörperende einerseits und der Nabenkörper andererseits stehen vorzugsweise ausschließlich in radialer Richtung miteinander in Wirkverbindung. Damit kann insbesondere auf einen radial zur Rotationsachse hin gerichteten Vorsprung des Kranzkörpers zur Übertragung von Axialkräften zwischen dem Nabenkörper und dem Kranzkörper verzichtet und die damit einhergehenden Kerbwirkungen vermieden werden. Am ersten axialen Kranzkörperende kann der Kranzinnendurchmesser einen ersten Kranzinnenenddurchmesser aufweisen. Vorzugsweise ist das erste axiale Kranzkörperende mit dem ersten Kranzinnenenddurchmesser an der Außenmantelfläche angeordnet. Am zweiten axialen Kranzkörperende kann der Kranzinnendurchmesser einen zweiten Kranzinnenenddurchmesser aufweisen. Vorzugsweise ist das zweite axiale Kranzkörperende mit dem zweiten Kranzinnenenddurchmesser an der Außenmantelfläche angeordnet.

Insbesondere kann der Kranzkörper im Bereich der ersten Nabenstirnseite und/oder der zweiten Nabenstirnseite ausschließlich an der Außenmantelfläche des Nabenkörpers anliegen. Der Kranzkörper kann derart an der Außenmantelfläche des Nabenkörpers anliegen, dass er an die erste Nabenstirnfläche und/oder die zweite Nabenstirnfläche, vorzugsweise ausschließlich, radial angrenzend angeordnet ist.

In einer bevorzugten Ausführungsform der Erfindung ist die Mitnahmeverzahnung die erste Kranzstirnfläche schneidend angeordnet. Ein axiales Ende der Mitnahmeverzahnung kann dabei in der ersten Nabenstirnfläche angeordnet sein. Scharfe Kanten, die typischerweise am Auslauf der Mitnahmeverzahnung auftreten, werden damit vorzugsweise nicht von dem Kranzkörper umgriffen. Am Auslauf der Mitnahmeverzahnung auftretende Kerbspannungen im Kranzkörper können damit vermieden werden. Das Maximum im Fußkreisdurchmesserverlauf kann dabei die Übertragung axialer Kräfte zwischen dem Nabenkörper und dem Kranzkörper ermöglichen. Die erste Kranzstirnfläche ist vorzugsweise orthogonal zu der Rotationsachse angeordnet. Der erste Kranzinnenenddurchmesser kann in derselben Ebene wie die erste Kranzstirnfläche angeordnet sein. Vorzugsweise ist die Mitnahmeverzahnung die erste Kranzstirnfläche derart schneidend angeordnet, dass die erste Kranzstirnfläche radial unmittelbar an die Mitnahmeverzahnung angrenzt. Die erste Kranzstirnfläche und die erste Nabenstirnfläche können dabei in derselben Ebene angeordnet sein. Die erste Kranzstirnfläche und die erste Nabenstirnfläche können damit radial aneinander angrenzend angeordnet sein. Alternativ können die erste Kranzstirnfläche und die erste Nabenstirnfläche in unterschiedlichen Ebene angeordnet sein.

Der Kranzkörper weist vorzugsweise am zweiten axialen Kranzkörperende eine axial gegenüber der ersten Kranzstirnfläche angeordnete zweite Kranzstirnfläche auf, wobei die Mitnahmeverzahnung die zweite Kranzstirnfläche schneidend angeordnet ist. So können die bereits geschilderten negativen Auswirkungen scharfer Kanten des Nabenkörpers auf den Kranzkörper im Bereich der zweiten Kranzstirnfläche vermieden werden. Vorzugsweise ist die Mitnahmeverzahnung die zweite Kranzstirnfläche derart schneidend angeordnet, dass die zweite Kranzstirnfläche radial unmittelbar an die Mitnahmeverzahnung angrenzt. Die zweite Kranzstirnfläche und die zweite Nabenstirnfläche können dabei in derselben Ebene angeordnet sein. Damit können die zweite Kranzstirnfläche und die zweite Nabenstirnfläche radial aneinander angrenzend angeordnet sein. Alternativ können die zweite Kranzstirnfläche und die zweite Nabenstirnfläche in unterschiedlichen Ebene angeordnet sein. Vorzugsweise ist die zweite Kranzstirnfläche orthogonal zu der Rotationsachse angeordnet.

Eine erfindungsgemäße Lenkeinheit für ein Kraftfahrzeug umfasst ein zuvor beschriebenes Verbundrad.

Ein Ausführungsbeispiel der Erfindung wird anhand der nachfolgenden Figuren erläutert. Es zeigt:
- Figur 1a: eine schematische perspektivische Schnittansicht eines ersten Ausführungsbeispiels eines Verbundrads,
- Figur 1b: eine schematische zweidimensionale Schnittansicht des in Fig. 1a gezeigten Ausführungsbeispiels,
- Figur 2a: eine schematische perspektivische Schnittansicht eines zweiten Ausführungsbeispiels eines Verbundrads,
- Figur 2b: eine schematische zweidimensionale Schnittansicht des in Fig. 2a gezeigten Ausführungsbeispiels,
- Figur 3a: eine schematische perspektivische Schnittansicht eines dritten Ausführungsbeispiels eines Verbundrads,
- Figur 3b: eine schematische zweidimensionale Schnittansicht des in Fig. 3a gezeigten Ausführungsbeispiels,
- Figur 4a: eine schematische perspektivische Schnittansicht eines vierten Ausführungsbeispiels eines Verbundrads,
- Figur 4b: eine schematische zweidimensionale Schnittansicht des in Fig. 4a gezeigten Ausführungsbeispiels,
- Figur 5a: eine schematische perspektivische Schnittansicht eines fünften Ausführungsbeispiels eines Verbundrads,
- Figur 5b: eine schematische zweidimensionale Schnittansicht des in Fig. 5a gezeigten Ausführungsbeispiels.

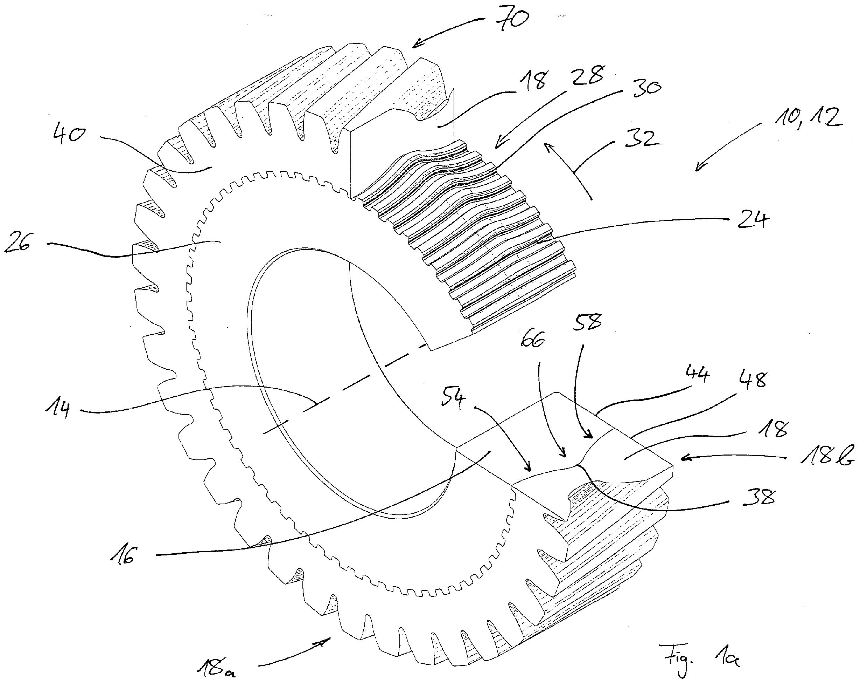

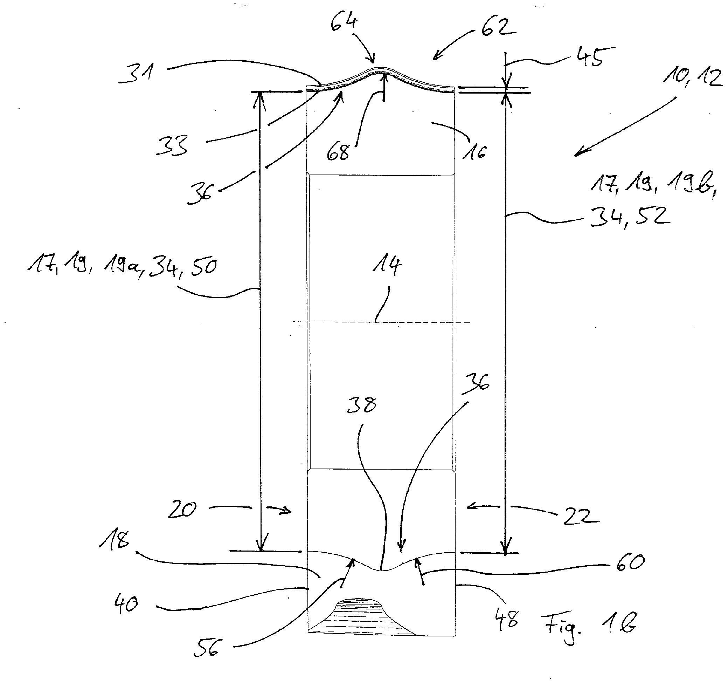

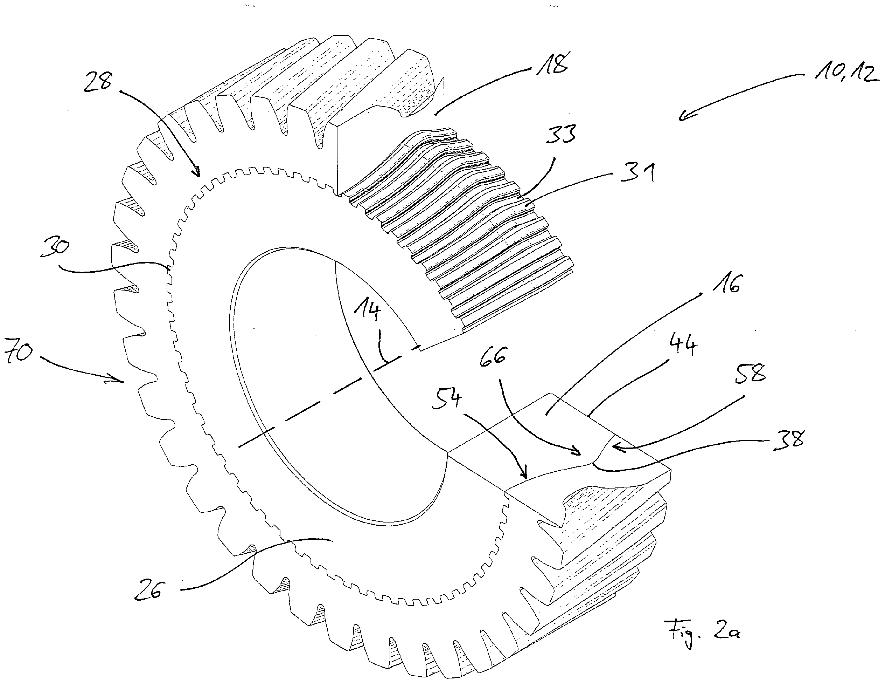

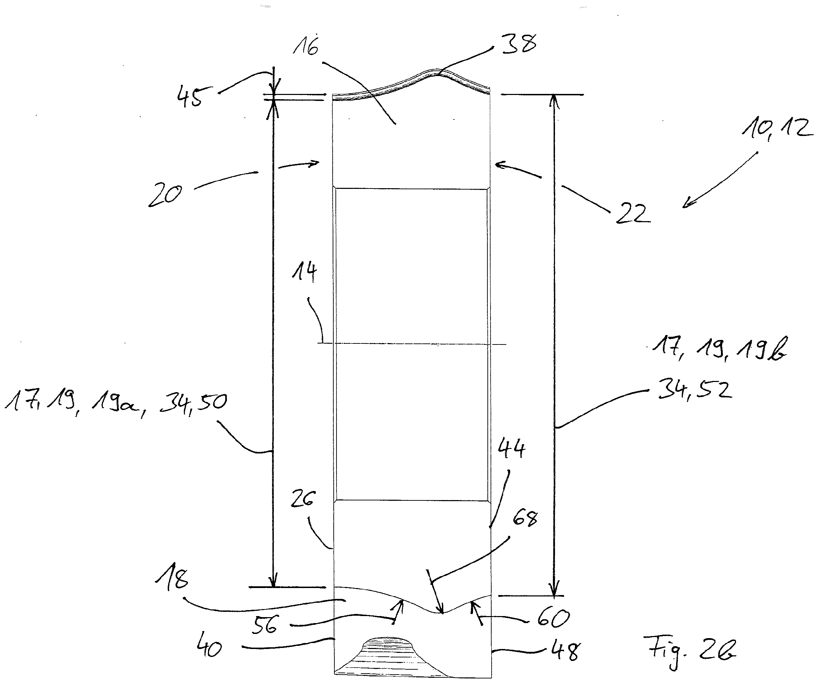

Die Figuren 1a bis 5b zeigen verschiedene Ansichten verschiedener Ausführungsbeispiele. Der Übersichtlichkeit halber werden nicht alle Bezugszeichen in jeder Figur verwendet. Für gleiche und funktionsgleiche Teile werden die gleichen Bezugszeichen verwendet. Die Figuren mit dem Index b, also Fig. 1b, 2b, usw. (im Folgenden als "Fig. b" bezeichnet), zeigen jeweils eine zweidimensionale Schnittansicht der in den Figuren mit dem Index , also Fig. 1a, 2a, usw. (im Folgenden als "Fig. a" bezeichnet), dargestellten Ausführungsbeispiele.

Die Fig. a zeigen schematische perspektivische Schnittansichten eines Verbundrads 10, das als Verbundzahnrad 12 ausgebildet ist. Das Verbundrad 10 umfasst eine Rotationsachse 14, einen Nabenkörper 16 und einen radial außerhalb des Nabenkörpers 16 angeordneten Kranzkörper 18. Der Nabenkörper 16 weist eine erste Nabenstirnseite 20, eine zweite Nabenstirnseite 22 sowie eine Außenmantelfläche 24 auf, wobei die erste Nabenstirnseite 20 eine erste Nabenstirnfläche 26 aufweist. Die Außenmantelfläche 24 ist entlang der Rotationsachse 14 zwischen der ersten Nabenstirnseite 20 und der zweiten Nabenstirnseite 22 angeordnet. Die Außenmantelfläche 24 weist außerdem eine Mitnahmeverzahnung 28 mit einer Vielzahl an Mitnahmezähnen 30 auf, die gleichmäßig in einer Umfangsrichtung 32 der Außenmantelfläche 24 um die Rotationsachse 14 angeordnet sind. Fig. 1a zeigt dabei anschaulich, dass die erste Nabenstirnfläche 26 orthogonal zur Rotationsachse 14 und die Außenmantelfläche 24 ringförmig um die Rotationsachse 14 angeordnet ist. Der Kranzkörper 18 und die Mitnahmeverzahnung 28 sind ineinander eingreifend angeordnet.

Der Kranzkörper 18 weist einen Kranzinnendurchmesser 19 auf, der einem Nabenaußendurchmesser 17 des Nabenkörpers 16 entsprechen kann. Insbesondere durch die Mitnahmeverzahnung 28 sind der Kranzinnendurchmesser 19 und der Nabenaußendurchmesser 17 entlang eines Umfangs des Verbundrads 10 variabel ausgebildet. So kann der Nabenaußendurchmesser 17 an einem Zahnkopf 31 einer der Mitnahmezähne 30 durch einen Kopfkreisdurchmesser der Mitnahmeverzahnung 28 und an einem Zahnfuß 33 einer der Mitnahmezähne 30 durch einen Fußkreisdurchmesser 34 der Mitnahmeverzahnung 28 definiert sein. Wie die Ausführungsbeispiele der Fig. 1a-4b zeigen, können der Kranzinnendurchmesser 19 und/oder der Nabenaußendurchmesser 17 entlang der Rotationsachse 14 variabel ausgebildet sein.

Vorzugsweise ist der Nabenkörper 16 aus Metall, besonders bevorzugt Stahl, gefertigt. Der Kranzkörper 18 ist bevorzugt aus Kunststoff, besonders bevorzugt POM, gefertigt. Insbesondere kann der Kranzkörper 18 mittels Kunststoffspritzgussverfahrens gefertigt sein, vorzugsweise derart, dass der Kranzkörper 18 unmittelbar auf den Nabenkörper 16 aufgespritzt ist. So kann die in den Figuren gezeigte Anordnung erreicht werden, bei der der Kranzkörper 18 unmittelbar und flächig an dem Nabenkörper 16 anliegt.

Ebenso wie in den Fig. a, verläuft der Schnitt in den Fig. b durch die Lücke zwischen zwei der Mitnahmezähne 30 und entlang der Mitnahmezähne 30. Bei den Ausführungsbeispielen in den Fig. 1a-2b sowie 4a-5b ist die Mitnahmeverzahnung 28 geradverzahnt ausgebildet. Die in diesen Figuren gezeigten Mitnahmezähne 30 und damit auch die Schnittebenen der gezeigten Schnitte sind somit jeweils entlang der Rotationsachse 14 angeordnet. Der Fußkreisdurchmesser 34 der Mitnahmeverzahnung 30 weist längs der Mitnahmezähne 30 einen Fußkreisdurchmesserverlauf 36 auf, der anhand der gewählten Schnittebenen entlang der Mitnahmezähne 30 insbesondere in den Fig. b deutlich erkennbar ist. Wie die Fig. a zeigen, weist der Fußkreisdurchmesserverlauf 36 beabstandet zu der ersten Nabenstirnfläche 26 ein Maximum 38 auf.

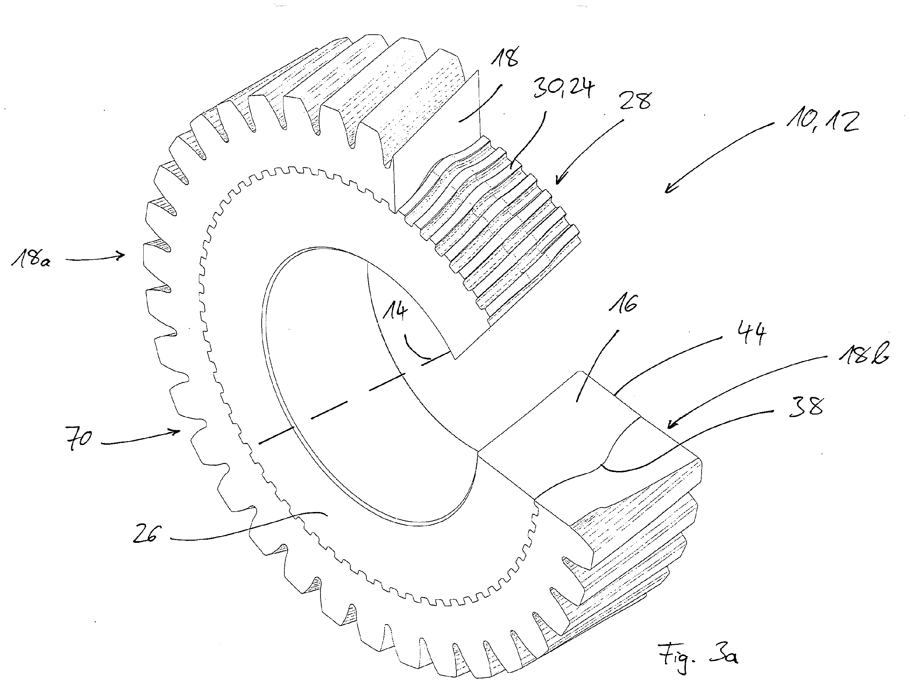

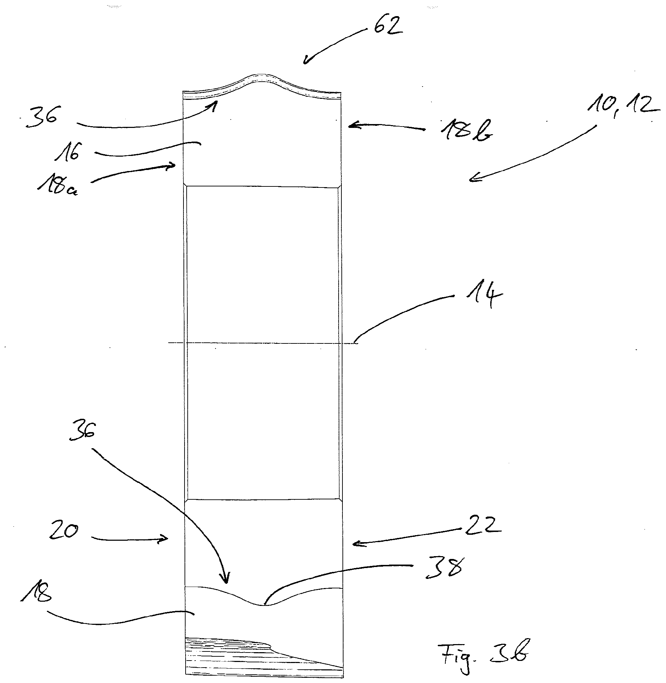

In allen gezeigten Ausführungsbeispielen weist der Kranzkörper 18 ein erstes axiales Kranzkörperende 18a und ein zweites axiales Kranzkörperende 18b auf. Dabei ist das erste axiale Kranzkörperende 18a an dem Nabenkörper 16 entlang des gesamten Umfangs des Verbundrads 10 ausschließlich an der Außenmantelfläche 24 angeordnet. Insbesondere im ersten und dritten Ausführungsbeispiel (Fig. 1a, 1b, 3a, 3b) stehen das erste axiale Kranzkörperende 18a und der Nabenkörper 16 ausschließlich in radialer Richtung miteinander in Wirkverbindung. Am ersten axialen Kranzkörperende 18a weist der Kranzinnendurchmesser 19 einen ersten Kranzinnenenddurchmesser 19a auf. Das erste axiale Kranzkörperende 18a ist mit dem ersten Kranzinnenenddurchmesser 19a an der Außenmantelfläche 24 angeordnet.

In den Ausführungsbeispielen der Fig. 1a-5b liegt darüber hinaus der Kranzkörper 18 im Bereich der ersten Nabenstirnseite 20 ausschließlich an der Außenmantelfläche 24 des Nabenkörpers 16 an. Dabei kann der Kranzkörper 18 an die erste Nabenstirnfläche 26 ausschließlich radial angrenzend angeordnet sein.

Mit Blick auf die untere Hälfte beispielsweise der in Fig. 1b gezeigten Schnittansicht kann gut nachvollzogen werden, dass der kunststoffgespritzte Kranzkörper 18 beim Abkühlen auf das Maximum 38 aufschwindet. Dort treten auch höhere Schwundspannungen auf. Betriebsspannungen, die typischerweise durch das Aufbringen von äußeren Kräften auf das Verbundrad 10 im Betrieb auftreten, können häufig am ersten axialen Kranzkörperende 18a im Bereich einer ersten Kranzstirnfläche 40 und der ersten Nabenstirnfläche 26 beobachtet werden, sodass mit der gezeigten Anordnung eine verhältnismäßig gleichmäßige Spannungsverteilung erreicht werden kann.

In den Ausführungsbeispielen der Fig. 1a-5b ist jeweils die Mitnahmeverzahnung 28 die erste Kranzstirnfläche 40 schneidend angeordnet. Ein axiales Ende der Mitnahmeverzahnung 28 ist dabei in der ersten Nabenstirnfläche 26 angeordnet. Die erste Kranzstirnfläche 28 ist orthogonal zu der Rotationsachse 14 angeordnet. Die perspektivischen Ansichten der Fig. a zeigen, dass die Mitnahmeverzahnung 28 die erste Kranzstirnfläche 40 derart schneidend angeordnet ist, dass die erste Kranzstirnfläche 40 radial unmittelbar an die Mitnahmeverzahnung 28 angrenzt. Die erste Kranzstirnfläche 40 und die erste Nabenstirnfläche 26 können dabei in derselben Ebene angeordnet sein. Außerdem sind in den entsprechenden Ausführungsbeispielen die erste Kranzstirnfläche 40 und die erste Nabenstirnfläche 26 radial aneinander angrenzend angeordnet.

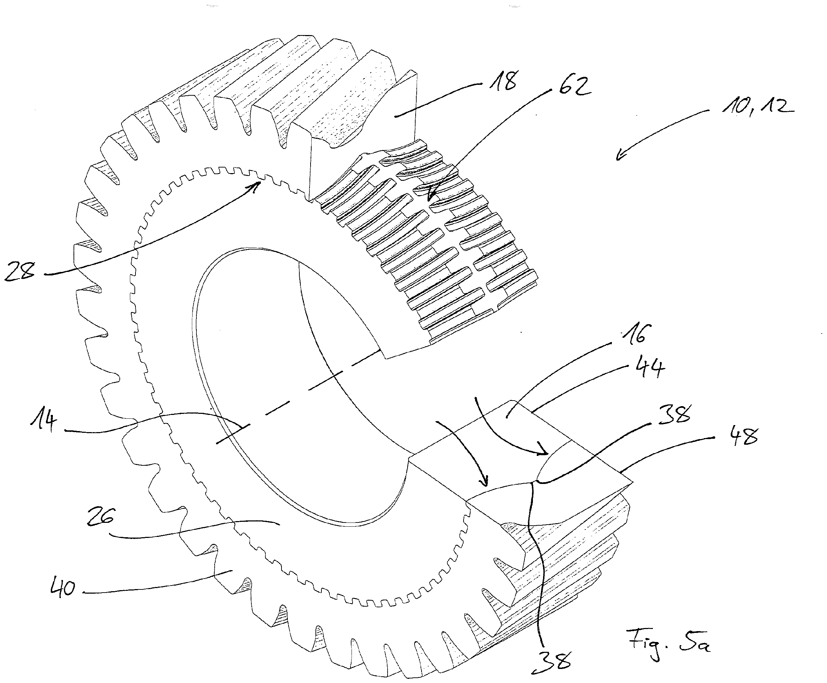

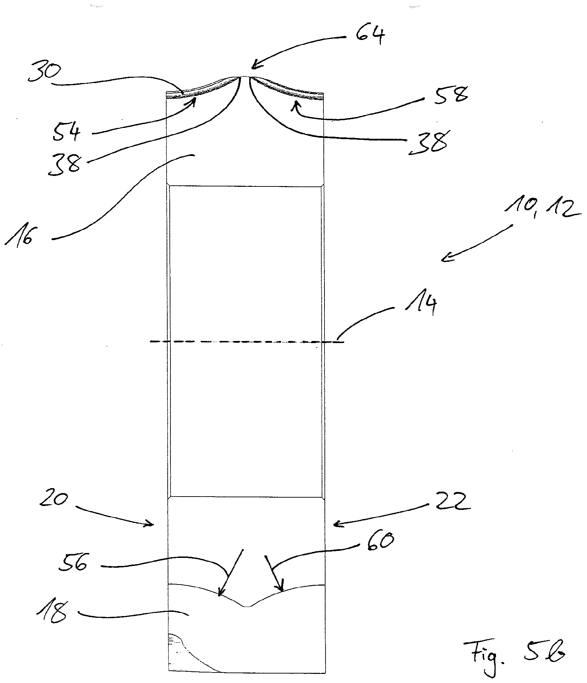

Wie die zweidimensionalen Schnittansichten der Fig. b veranschaulichen, weist die zweite Nabenstirnseite 22 eine zweite Nabenstirnfläche 44 auf, die axial gegenüber der ersten Nabenstirnfläche 26 angeordnet ist. Das Maximum 38 kann dabei mittig (Fig. 1a, 1b, 3a-4b) oder außermittig (Fig. 2a, 2b) zwischen der ersten Nabenstirnfläche 26 und der zweiten Nabenstirnfläche 44 angeordnet sein. Mit dem fünften Ausführungsbeispiel liegt ein Ausführungsbeispiel vor, das zwei Maxima 38 aufweist. Die beiden Maxima 38 können dabei unterschiedlich groß ausgebildet sein. Diese sind ebenfalls jeweils außermittig angeordnet (Fig. 5a, 5b). Bei allen gezeigten Ausführungsbeispielen ist das Maximum 38 beabstandet zu der zweiten Nabenstirnfläche 44 angeordnet. Wie die erste Nabenstirnfläche 26 ist auch die zweite Nabenstirnfläche 44 orthogonal zu der Rotationsachse 14 angeordnet. Darüber hinaus zeigen die Fig. b, dass eine Zahnhöhe 45 der Mitnahmezähne 30 entlang der Mitnahmezahnflanke zumindest abschnittsweise konstant ist.

In den Ausführungsbeispielen der Fig. 1a-5b liegt der Kranzkörper 18 im Bereich der zweiten Nabenstirnseite 22 ausschließlich an der Außenmantelfläche 24 des Nabenkörpers 16 an. Dabei ist insbesondere das zweite axiale Kranzkörperende 18b entlang des gesamten Umfangs des Verbundrads 10 an dem Nabenkörper 16 ausschließlich an der Außenmantelfläche 24 angeordnet. Das zweite axiale Kranzkörperende 18b weist einen zweiten Kranzinnenenddurchmesser 19b auf, mit dem das zweite axiale Kranzkörperende 18b an der Außenmantelfläche 24 angeordnet ist. Insbesondere kann der Kranzkörper 18 derart an der Außenmantelfläche des Nabenkörpers 16 anliegen, dass er an die zweite Nabenstirnfläche 44 ausschließlich radial angrenzend angeordnet ist.

Der Kranzkörper 18 weist am zweiten axialen Kranzkörperende 18b eine axial gegenüber der ersten Kranzstirnfläche 40 angeordnete zweite Kranzstirnfläche 48 auf, die orthogonal zu der Rotationsachse 18 angeordnet ist. In den Ausführungsbeispielen der Fig. 1a-5b ist die Mitnahmeverzahnung 28 die zweite Kranzstirnfläche 48 schneidend angeordnet, derart dass die zweite Kranzstirnfläche 48 radial unmittelbar an die Mitnahmeverzahnung 28 angrenzt. Die zweite Kranzstirnfläche 48 und die zweite Nabenstirnfläche 44 können dabei in derselben Ebene sowie radial aneinander angrenzend angeordnet sein.

Wie die Fig. b zeigen kann das Verbundrad 10 derart ausgestaltet sein, dass in der ersten Nabenstirnfläche 26 ein erster Fußkreisstirndurchmesser 50 und/oder in der zweiten Nabenstirnfläche 44 ein zweiter Fußkreisstirndurchmesser 52 angeordnet ist. Der erste Fußkreisstirndurchmesser 50 kann gleich (Fig. 1b, 3b, 4b, 5b) oder ungleich (Fig. 2b) dem zweiten Fußkreisstirndurchmesser 52 sein. Wie die Fig. b zeigen, bilden der erste Fußkreisstirndurchmesser 50 und/oder der zweite Fußkreisstirndurchmesser 52 jeweils einen Endpunkt des Fußkreisdurchmesserverlaufs 36. Dadurch kann das Verbundrad 10 beispielsweise hinsichtlich der zu erwartenden Axialkräfte und/oder hinsichtlich der Fertigungsrandbedingungen angepasst werden.

In den Ausführungsbeispielen der Fig. 1a-4b ist der Fußkreisdurchmesserverlauf 36 zudem von der ersten Nabenstirnfläche 26 bis zur zweiten Nabenstirnfläche 44 durchgehend stetig und differenzierbar ausgebildet. Dies veranschaulichen insbesondere die Fig. 1b, 2b, 3b, u. 4b.

In den Ausführungsbeispielen der Fig. 1a-3b weist der Fußkreisdurchmesserverlauf 36 ebenso wie im fünften Ausführungsbeispiel einen ersten konkaven Abschnitt 54 in Form einer zum Kranzkörper 18 hin geöffneten Ausnehmung mit einem, vorzugsweise konstanten, ersten Kavitätsradius 56 auf.

In den Ausführungsbeispielen der Fig. 1a-3b sowie 5a u. 5b weist der Fußkreisdurchmesserverlauf 36 zudem einen zweiten konkaven Abschnitt 58 mit einem, vorzugsweise konstanten, zweiten Kavitätsradius 60 auf. Während im ersten, dritten und fünften Ausführungsbeispiel der erste Kavitätsradius 56 gleich dem zweiten Kavitätsradius 60 ist, ist der erste Kavitätsradius 56 im zweiten Ausführungsbeispiel ungleich dem zweiten Kavitätsradius 60. Wie die Fig. 1a-3b weiter zeigen, kann das Maximum 38 des Fußkreisdurchmesserverlaufs 36 zwischen dem ersten konkaven Abschnitt 54 und dem zweiten konkaven Abschnitt 58 angeordnet sein.

Wie die Fig. 1a-5b zeigen, kann die Außenmantelfläche 24 einen konvexen Außenmantelabschnitt 64 in Form einer sich zum Kranzkörper hin erhebenden Wölbung aufweisen. Dabei ist das Maximum des Fußkreisdurchmesserverlaufs 36 innerhalb des konvexen Außenmantelabschnitts 64 angeordnet. In den Ausführungsbeispielen der Fig. 1a-4b ist weist der Fußkreisdurchmesserverlauf 36 innerhalb des konvexen Außenmantelabschnitts 64 einen konvexen Fußkreisabschnitt 66 mit einem Konvexitätsradius 68 auf. Dabei ist das Maximum 38 des Fußkreisdurchmesserverlaufs 36 in dem konvexen Fußkreisabschnitt 66 angeordnet. Zumindest im vierten Ausführungsbeispiel ist der Konvexitätsradius 68 konstant ausgebildet. Bei den Ausführungsbeispielen der Fig. 1a-3b sowie 5a u. 5b sind der erste Kavitätsradius 56 und der zweite Kavitätsradius 60 beidseits des konvexen Außenmantelabschnitts 64 konstant, sodass die Mitnahmeverzahnung 28 jeweils abschnittsweise eine halbgloboidförmige Kontur aufweist.

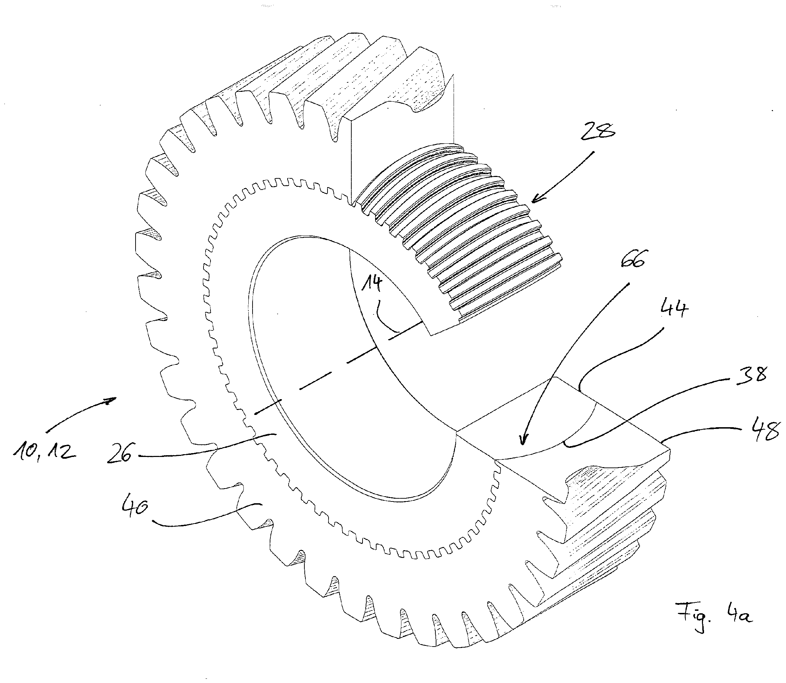

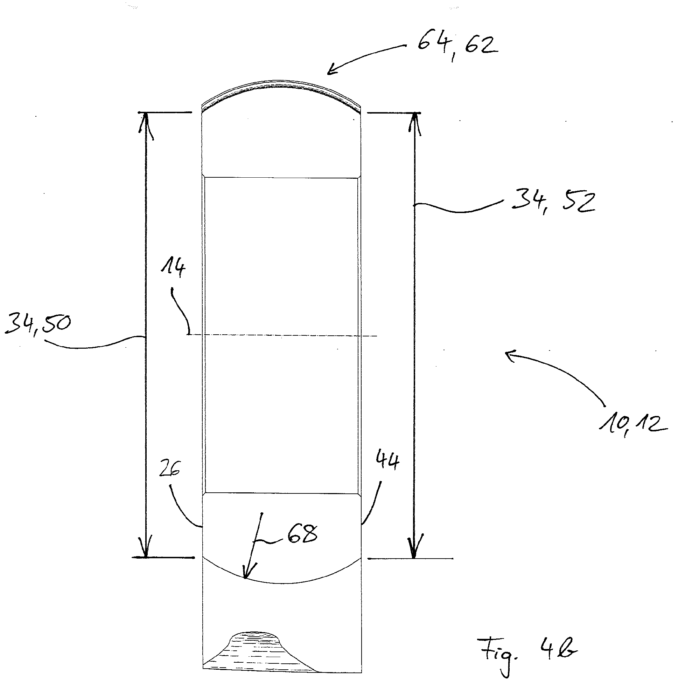

Im vierten Ausführungsbeispiel erstreckt sich der konvexe Außenmantelabschnitt 64 von der ersten Nabenstirnfläche 26 bis zur zweiten Nabenstirnfläche 44 (Fig. 4a u. 4b).

Wie die Fig. 3a zeigt, ist es außerdem möglich, die Mitnahmeverzahnung 28 als Schrägverzahnung auszubilden. Dadurch kann ein Anteil einer zu zwischen dem Kranzkörper 18 und dem Nabenkörper 16 zu übertragenden Axialkraft zusätzlich über Mitnahmezahnflanken der Mitnahmezähne 30 übertragen werden. Wie alle der gezeigten Ausführungsbeispiele, ist auch das in Fig. 3a gezeigte Verbundrad 10 als schrägverzahntes Verbundzahnrad 12 ausgebildet. Im Falle der schrägverzahnten Mitnahmeverzahnungen 28 des dritten Ausführungsbeispiels, sind jeweils die Mitnahmeverzahnung 28 und eine Verbundradverzahnung 70 des Verbundrads 10 in dieselbe Richtung gegen die Rotationsachse 14 geneigt. Beim dritten Ausführungsbeispiel ist dabei ein Mitnahmeschrägungswinkel der Mitnahmeverzahnung 28 kleiner als ein Verbundradschrägungswinkel der Verbundradverzahnung 70 (Fig. 3a).

### Bezugszeichenliste

- 10: Verbundrad
- 12: Verbundzahnrad
- 14: Rotationsachse
- 16: Nabenkörper
- 17: Nabenaußendurchmesser
- 18: Kranzkörper
- 18a: erstes axiales Kranzkörperende
- 18b: zweites axiales Kranzkörperende
- 19: Kranzinnendurchmesser
- 19a: erster Kranzinnenenddurchmesser
- 19b: zweiter Kranzinnenenddurchmesser
- 20: erste Nabenstirnseite
- 22: zweite Nabenstirnseite
- 24: Außenmantelfläche
- 26: erste Nabenstirnfläche
- 28: Mitnahmeverzahnung
- 30: Mitnahmezahn
- 31: Zahnkopf
- 32: Umfangsrichtung
- 33: Zahnfuß
- 34: Fußkreisdurchmesser
- 36: Fußkreisdurchmesserverlauf
- 38: Maximum
- 40: erste Kranzstirnfläche
- 42: Auslauf
- 44: zweite Nabenstirnfläche
- 45: Zahnhöhe
- 46: Vorsprung
- 48: zweite Kranzstirnfläche
- 50: erster Fußkreisstirndurchmesser
- 52: zweiter Fußkreisstirndurchmesser
- 54: erster konkaver Abschnitt
- 56: erster Kavitätsradius
- 58: zweiter konkaver Abschnitt
- 60: zweiter Kavitätsradius
- 64: konvexer Außenmantelabschnitt
- 66: konvexer Fußkreisabschnitt
- 68: Konvexitätsradius
- 70: Verbundradverzahnung

## Patentansprüche

1. Nabenkörper (16) für ein Verbundrad (10), insbesondere ein Verbundzahnrad (12), aufweisend
• eine Rotationsachse (14),
• eine erste Nabenstirnseite (20),
• eine zweite Nabenstirnseite (22),
• eine entlang der Rotationsachse (14) zwischen der ersten Nabenstirnseite (20) und der zweiten Nabenstirnseite (22) angeordnete Außenmantelfläche (24), wobei die Außenmantelfläche (24) eine Mitnahmeverzahnung (28) mit mindestens einem Mitnahmezahn (30) aufweist,
**dadurch gekennzeichnet, dass**
die Außenmantelfläche (24) einen konvexen Außenmantelabschnitt (64) aufweist.

2. Nabenkörper nach Anspruch 1 oder dem Oberbegriff des Anspruchs 1,
**dadurch gekennzeichnet, dass**
ein Fußkreisdurchmesser (34) der Mitnahmeverzahnung (28) längs des mindestens einen Mitnahmezahns (30) einen Fußkreisdurchmesserverlauf (36) mit einem Maximum (38) aufweist.

3. Nabenkörper nach einem der vorhergehenden Ansprüche,
**dadurch gekennzeichnet, dass**
das Maximum (38) des Fußkreisdurchmesserverlaufs (36) in dem konvexen Außenmantelabschnitt (64) angeordnet ist.

4. Nabenkörper nach einem der vorhergehenden Ansprüche,
**dadurch gekennzeichnet, dass** die erste Nabenstirnseite (20) eine erste Nabenstirnfläche (26) und die zweite Nabenstirnseite (22) eine zweite Nabenstirnfläche (44) aufweist, wobei das Maximum (38)
• beabstandet zu der ersten Nabenstirnfläche (26) und/oder der zweite Nabenstirnfläche (44) angeordnet ist,
und/oder
• mittig oder außermittig zwischen der ersten Nabenstirnfläche (26) und der zweiten Nabenstirnfläche (44) angeordnet ist.

5. Nabenkörper nach Anspruch 4,
**dadurch gekennzeichnet, dass**
ein in der ersten Nabenstirnfläche (26) angeordneter erster Fußkreisstirndurchmesser (50) gleich oder ungleich einem in der zweiten Nabenstirnfläche (44) angeordneten zweiten Fußkreisstirndurchmesser (52) ist.

6. Nabenkörper nach einem der Ansprüche 4 bis 5,
**dadurch gekennzeichnet, dass**
der Fußkreisdurchmesserverlauf (36) von der ersten Nabenstirnfläche (26) bis zur zweiten Nabenstirnfläche (44) durchgehend stetig und/oder differenzierbar ausgebildet ist.

7. Nabenkörper nach einem der Ansprüche 4 bis 6,
**dadurch gekennzeichnet, dass**
sich der konvexe Außenmantelabschnitt (64) von der ersten Nabenstirnfläche (26) bis zur zweiten Nabenstirnfläche (44) erstreckt.

8. Nabenkörper nach einem der Ansprüche 1 bis 6,
**dadurch gekennzeichnet, dass**
der Fußkreisdurchmesserverlauf (36) einen ersten konkaven Abschnitt (54) mit einem, vorzugsweise konstanten, ersten Kavitätsradius (56) aufweist.

9. Nabenkörper nach Anspruch 8,
**dadurch gekennzeichnet, dass**
der Fußkreisdurchmesserverlauf (36) einen zweiten konkaven Abschnitt (58) mit einem, vorzugsweise konstanten, zweiten Kavitätsradius (60) aufweist, wobei der erste Kavitätsradius (56) gleich oder ungleich dem zweiten Kavitätsradius (60) ist.

10. Nabenkörper nach einem der vorhergehenden Ansprüche,
**dadurch gekennzeichnet, dass**
die Mitnahmeverzahnung (28) als Schrägverzahnung ausgebildet ist.

11. Verbundrad (10), insbesondere Verbundzahnrad (12),
mit einem Nabenkörper (16) nach einem der vorhergehenden Ansprüche und einem radial außerhalb des Nabenkörpers (16) angeordneten Kranzkörper (18), aufweisend ein erstes axiales Kranzkörperende (18a) und ein zweites axiales Kranzkörperende (18b), wobei der Kranzkörper (18) und die Mitnahmeverzahnung (28) ineinander eingreifend angeordnet sind.

12. Verbundrad nach Anspruch 11,
**dadurch gekennzeichnet, dass**
das erste axiale Kranzkörperende (18a) und/oder das zweite axiale Kranzkörperende (18b) an dem Nabenkörper (16) ausschließlich an der Außenmantelfläche (24) angeordnet ist.

13. Verbundrad nach einem der Ansprüche 11 bis 12,
**dadurch gekennzeichnet, dass**
der Kranzkörper (18) am ersten axialen Kranzkörperende (18a) eine erste Kranzstirnfläche (40) aufweist und die Mitnahmeverzahnung (28) die erste Kranzstirnfläche (40) schneidend angeordnet ist.

14. Verbundrad nach einem der vorhergehenden Ansprüche,
**dadurch gekennzeichnet, dass**
der Kranzkörper (18) am zweiten axialen Kranzkörperende (18b) eine axial gegenüber der ersten Kranzstirnfläche (40) angeordnete zweite Kranzstirnfläche (48) aufweist, wobei die Mitnahmeverzahnung (28) die zweite Kranzstirnfläche (48) schneidend angeordnet ist.

15. Lenkeinheit für ein Kraftfahrzeug mit einem Verbundrad (10) nach einem der vorhergehenden Ansprüche.
